# EUROPÄISCHE PATENTSCHRIFT

(11) **EP 2 134 575 B1**
(45) Veröffentlichungstag und Bekanntmachung des Hinweises auf die Patenterteilung: **02.05.2012**
(21) Anmeldenummer: 08717604.6
(22) Anmeldetag: 11.03.2008
(51) Int. Cl.: B60R 21/217, B60R 21/20

(54) **GASSACKANORDNUNGEN FÜR EIN FAHRZEUGINSASSEN-RÜCKHALTESYSTEM**
AIRBAG ARRANGEMENT FOR A VEHICLE OCCUPANT RESTRAINT SYSTEM
AGENCEMENT AIRBAG POUR UN SYSTÈME DE RETENUE D'UN OCCUPANT DE VÉHICULE AUTOMOBILE

(30) Priorität: 12.03.2007 DE 202007003906 U
(43) Veröffentlichungstag der Anmeldung: 23.12.2009
(73) Patentinhaber: Takata-Petri AG, 63743 Aschaffenburg (DE)
(72) Erfinder: GLÖCKLER, Oliver, 89278 Nersingen (DE); BAUMGARTNER, Peter, 89312 Günzburg (DE)
(74) Vertreter: Staroske, Sandro
(86) Internationale Anmeldenummer: PCT/EP2008/052857
(87) Internationale Veröffentlichungsnummer: WO 2008/110549

(56) Entgegenhaltungen:
- EP-A- 1 798 119
- DE-A1- 10 114 208
- DE-U1- 9 101 099
- DE-U1-202005 011 878
- JP-A- 4 146 840
- US-A- 5 096 222

## Beschreibung

Die Erfindung betrifft eine Gassackanordnung für ein Fahrzeuginsassen-Rückhaltesystem.

Es ist bekannt, einen Gassack eines Fahrzeuginsassen-Rückhaltesystems zu einem Gassackpaket zusammenzufalten und in einer dicht verschweißten, evakuierten Folie zu verpacken (Vakuumverpackung). Dies ist z.B. in der DE 10 2004 056 128 A1 und der DE 101 14 208 A1 beschrieben. Aus EP1798 119 ist eine Gassackanordnung nach dem Oberbegriff des Anspruchs 1 bekannt.

Eine Schwierigkeit bei der Vakuumverpackung eines Gassacks besteht darin, dass an dem Gassack ein Gasgenerator zum Aufblasen des Gassacks angeordnet werden muss. Hierfür sind Öffnungen in Gassack und Folie erforderlich, die die Dichtheit des verschweißten Gassackpaketes beeinträchtigen. Beispielsweise weist der Gassack und die den Gassack umgebende Folie eine Öffnung auf, durch die der Gasgenerator in den Gassack hineinragt.

Der Gasgenerator kann auch überwiegend innerhalb des Gassacks angeordnet sein, wobei jedoch ein Zündkabel des Gasgenerators durch den Gassack und die Folie hindurch nach außen geführt werden muss. Zudem wird der in den Gassack eingeführte Gasgenerator mittels Stehbolzen, die an den Gasgenerator z. B. angeschweißt oder mit Klemmschellen angebracht sind, an einer Haltevorrichtung der Fahrzeugkarosserie befestigt, wobei die Stehbolzen ebenfalls aus dem Gassack und der Folie herausgeführt werden müssen.

Das von der Erfindung zu lösende Problem besteht darin, die Dichtheit einer Hülle eines Gassackpaketes beim Verbinden des verschlossenen Gassackpaketes mit einem Gasgenerator möglichst wenig zu beeinträchtigen.

Dieses Problem wird durch eine Gassackanordnung mit den Merkmalen des Anspruchs 1 gelöst. Bevorzugte Weiterbildungen der Erfindung sind in den abhängigen Ansprüchen angegeben.

Danach ist eine Gassackanordnung für ein Fahrzeuginsassen-Rückhaltesystem angegeben, mit
- einem Gassack, der zu einem Gassackpaket gefaltet ist;
- einer evakuierbaren Hülle, die das Gassackpaket umschließt;
- einem Gasgenerator zum Aufblasen des Gassacks;
- einer Aufnahme, in der der Gasgenerator zumindest mit einem Abschnitt aufgenommen ist, wobei
- die Aufnahme durch einen Abschnitt der das Gassackpaket umschließenden Hülle gebildet ist,
- der Gassack eine Öffnung aufweist, in der die Aufnahme zumindest abschnittsweise angeordnet ist oder hineinragt, wobei
- der Gasgenerator als Rohrgasgenerator ausgebildet ist; und
- die Öffnung (23) als Loch in einer eine Kammer des Gassacks bildenden Gassacklage ausgebildet ist, in das die Aufnahme hineinragt, oder
- die Aufnahme (31) hohlzylindrisch ausgebildet ist und die Öffnung (23) einen hohlzylindrischen Bereich (32) aufweist, in dem die Aufnahme (31) angeordnet ist.

In dieser Gassackanordnung ist der Gasgenerator nicht unmittelbar in einer Öffnung des Gassacks angeordnet, sondern in einer Aufnahme, die durch die evakuierbare (gasdichte) Hülle gebildet ist. Beispielsweise ist die Aufnahme derart in der Öffnung des Gassacks angeordnet, dass die Öffnung durch die Aufnahme verschlossen ist. Hierdurch werden Durchgangsöffnungen in der Hülle zum Anordnen des Gasgenerators vermieden; die Hülle ist evakuierbar, so dass der Gassack in ihr vakuumverpackt werden kann.

Die "Öffnung" kann zum einen eine (räumliche) Aufnahmestruktur sein (z.B. schlauchförmig ausgebildet). Beispielsweise kann eine derartige Aufnahmestruktur einen Zugang zu einem aufblasbaren Bereich des Gassacks umfassen. DieÖffnung kann jedoch ebenfalls eine (flächenhafte) Aussparung (ein Loch) im Gassack bzw. im Gassackmaterial sein.

In einer Weiterbildung der Erfindung ist die durch die Hülle gebildete Aufnahme so ausgestaltet, dass sie unter Einwirkung von Gas, das aus dem Gasgenerator ausströmt, die Öffnung des Gassacks zumindest teilweise freigibt. Insbesondere kann die Aufnahme auf einem Material (z. B. Kunststoff in Form einer Folie) gebildet sein, das unter Einwirkung von Gas, das aus dem Gasgenerator ausströmt, zumindest teilweise zerreist (z.B. durch Temperatureinwirkung ausströmenden heißen Gases).

Des Weiteren kann die Öffnung des Gassacks, in der die Aufnahme angeordnet ist, einen vom Gassack abstehenden Bereich aufweisen, und sich die durch die Hülle ausgebildete Aufnahme in diesen Bereich hineinerstrecken. Der vom Gassack abstehende Bereich kann z. B. hohlzylindrisch, insbesondere schlauch- oder rohrförmig ausgebildet sein. Es wird angemerkt, dass dies selbstverständlich nur eine Variante ist; es kann - wie oben bereits erwähnt - z. B. auch eine ebene, lochartige Öffnung in dem Gassack (z. B. in einer eine Gassackkammer bildende Gassacklage) vorhanden sein, in den die durch die Hülle gebildete Aufnahme mitsamt dem Gasgenerator hineinragt.

Vorteilhafterweise ist der von der Öffnung des Gassacks abstehende Bereich an dem Gasgenerator festgelegt, was z. B. mittels einer Klemmverbindung (z. B. per Schelle) erfolgt. Darüber hinaus kann der abstehende Bereich einen ersten Abschnitt und einen zweiten Abschnitt aufweisen, der sich abgewinkelt zum ersten Abschnitt erstreckt. Hierbei kann die Öffnung des Gassacks z. B. einen hohlzylindrischen Ansatz aufweisen, der z.B. rechtwinklig in einen weiteren z.B. ebenfalls hohlzylindrisch ausgebildeten Bereich mündet. Es existieren jedoch vielfältige Möglichkeiten, den von der Öffnung des Gassacks abstehenden Bereich auszubilden. Insbesondere ist der abstehende Bereich so ausgebildet, dass er ein Festlegen der durch die Hülle gebildeten Aufnahme und des in der Aufnahme angeordneten Gasgenerators, der insbesondere als Rohrgasgenerator ausgebildet ist, ermöglicht.

In einer anderen Weiterbildung der Erfindung weist die Hülle ein erstes Teilstück und ein zweites Teilstück auf, wobei das erste Teilstück mit dem zweiten Teilstück im Wesentlichen gasdicht verbunden ist. Das Verbinden der beiden Teilstücke erfolgt beispielsweise durch Verschweißen oder Verkleben.

In dem ersten Teilstück kann zum einen eine Gassackpaketaufnahme, in der das Gassackpaket aufgenommen ist, und zum anderen die Aufnahme für den Gasgenerator ausgebildet sein. Als Material für die beiden Teilstücke kommt insbesondere Kunststoff infrage, in dem durch Tiefziehen ein Hohlraum zum Ausbilden der Gassackpaketaufnahme und der Aufnahme für den Gasgenerator erzeugt wird.

In einer besonders bevorzugten Variante der Erfindung ist in dem Hohlraum (des ersten und/oder des zweiten Teilstückes) durch Einstülpen eines vom Hohlraum abgehenden Hohlraumfortsatzes in den Hohlraum die Aufnahme für den Gasgenerator gebildet.

Des Weiteren ist die Hülle bevorzugt flexibel ausgebildet und sie wird zum Komprimieren des Gassackpaketes evakuiert, so dass in der Hülle ein Unterdruck vorliegt.

Es wird darauf hingewiesen, dass unter dem Begriff "Gasgenerator" auch eine Anordnung aus einem Gasgenerator (d. h. einer Kammer mit einer pyrotechnischen Einheit) und einem Diffusor zum Verteilen eines aus der Gasgeneratorkammer austretenden Gasstroms verstanden wird. Insbesondere kann der Rohrgasgenerator einen axial angeordneten Diffusor umfassen.

Die Erfindung wird im Folgenden anhand von Ausführungsbeispielen unter Bezugnahme auf die Figuren näher erläutert. Es zeigen:
- Figur 1: eine erste Variante einer Gassackanordnung gemäß der Erfindung;
- Figur 2: schematisch einen Querschnitt einer Gassackanordnung gemäß der Erfindung;
- Figur 3A, 3B: eine Variante einer Hülle für ein Gassackpaket entsprechend der Erfindung;
- Figur 4: eine Variante eines Gassacks in ungefaltetem Zustand entsprechend der Erfindung;
- Figur 5: eine Variante einer Hülle für ein Gassackpaket:
- Figur 6: eine zweite Variante einer Hülle für ein Gassackpaket;
- Figuren 7A bis 7C: eine dritte Variante einer Hülle für ein Gassackpaket;
- Figuren 8A, 8B: ein Beispiel einer nicht erfindungsgemäßen Gassackanordnung;
- Figuren 9A, 9B: ein weiteres, nicht erfindungsgemäßes Beispiel eines Gassacks im Querschnitt;
- Figuren 10A bis 10C: ein weiteres, nicht erfindungsgemäßes Beispiel einer Gassackanordnung;
- Figuren 11A, 11 B: ein weiteres, nicht erfindungsgemäßes Beispiel einer Gassackanordnung;
- Fig. 12A bis 12C: ein weiteres, nicht erfindungsgemäßes Beispiel einer Gassackanordnung;
- Figur 13: ein nicht erfindungsgemäßes Gassackpaket;
- Fig. 14A bis 14 H: ein weiteres, nicht erfindungsgemäßes Beispiel Gassackanordnung; und
- Figuren 15A, 15B: ein weiteres, nicht erfindungsgemäßes Beispiel einer Gassackanordnung.

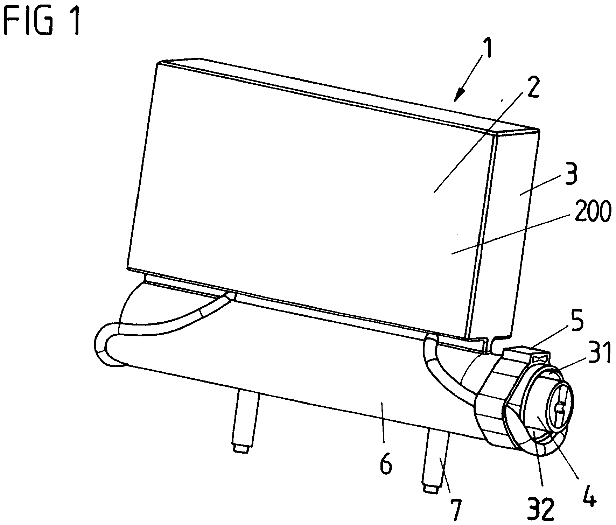

Figur 1 zeigt eine erste Ausführungsform einer Gassackanordnung gemäß dem ersten Aspekt der Erfindung. Eine Gassackanordnung 1 weist einen zu einem Gassackpaket 200 gefalteten Gassack 2 auf, der von einer gasdicht verschlossenen Hülle 3 umgeben ist. Des Weiteren ist ein Rohrgasgenerator 4 vorgesehen, der zum Aufblasen des Gassacks 2 dient und der in einer hohlzylindrischen Aufnahme 31 aufgenommen ist, die durch einen Abschnitt der Hülle 3 ausgebildet ist. Die Aufnahme 31 wiederum ist in einem ebenfalls hohlzylindrisch ausgebildeten Bereich 32 einer Öffnung 23 des Gassacks 2 angeordnet.

Der Gasgenerator 4 mit dem hohlzylindrischen Bereich 32 und mit der Aufnahme 31 mittels einer Schelle 5 verbunden. Gleichzeitig ist über die Schelle 5 ein Halter 6 am Gasgenerator befestigt. Der Halter 6 weist Stehbolzen 7 zur Befestigung des Halters 6 (und damit des Gasgenerators 4) an einer Fahrzeugkarosserie oder an einem mit einer Fahrzeugkarosserie verbundenen Teil auf.

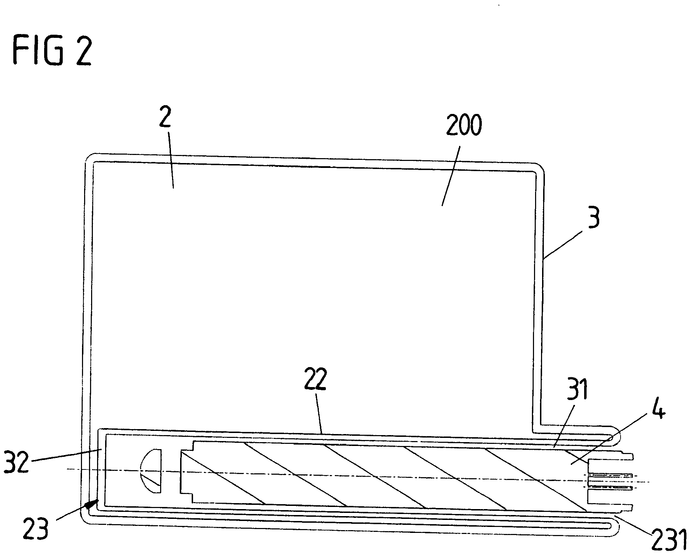

Figur 2 zeigt eine Variante einer Gassackanordnung, die im Wesentlichen der Anordnung der Figur 1 entspricht, im Querschnitt. Ein aus einem gefalteten Gassack 2 gebildetes Gassackpaket 200 ist von einer evakuierten Hülle 3 im Wesentlichen gasdicht umschlossen. Die Hülle 3 bildet eine Aufnahme 31 aus, die in einem hohlzylindrischen Bereich 32 einer Öffnung 23 des Gassacks 2 angeordnet ist. Der hohlzylindrische Bereich 32 weist ein Ende 231 auf, durch das die Aufnahme 31 zusammen mit einem in ihr angeordneten Gasgenerator 4 in den hohlzylindrischen Bereich 32 eingeführt werden kann. Ein weiterer Abschnitt 22 des hohlzylindrischen Bereiches 32 mündet in eine Kammer des Gassacks 2.

Die Aufnahme 31 ist derart in dem hohlzylindrischen Bereich 32 angeordnet und gasdicht ausgeführt, dass sie die Öffnung 23 des Gassacks verschließt und dadurch insbesondere ein Einströmen von Luft und eine Beeinträchtigung des in der Hülle 3 vorliegenden Vakuums vor dem Aufblasen des Gassacks verhindert. Erst durch Einwirken von Gas, das aus dem Gasgenerator 4 gegen die Aufnahme 31 strömt, gibt diese die Öffnung 23 frei, so dass Gas vom Gasgenerator 4 in den Gassack strömen kann. Insbesondere zerreißt die (z.B. aus einer Kunststofffolie gebildete) unter Einwirkung von anströmendem Gas.

Die Längsachse des Rohrgasgenerators 4 erstreckt sich entlang des hohlzylindrisch ausgebildeten Bereichs 32 sowie der ebenfalls hohlzylindrisch ausgebildeten Aufnahme 31. Beispielsweise sind die Aufnahme 31 und der hohlzylindrische Bereich 32 koaxial zu dem Gasgenerator 4 angeordnet.

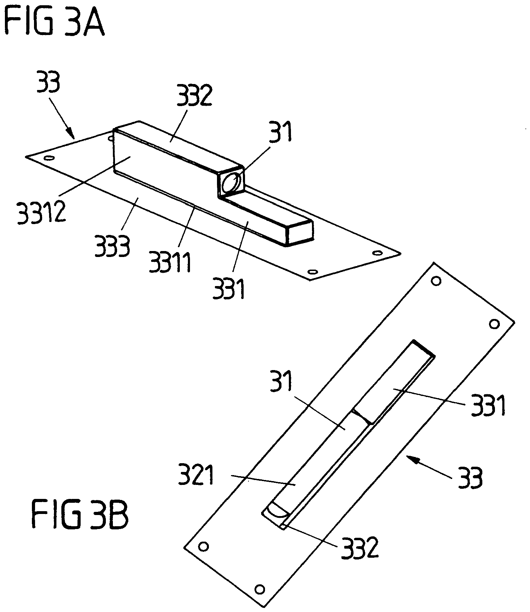

Die Figuren 3a und 3b zeigen verschiedene Ansichten eines Teilstücks 33 einer Hülle für ein Gassackpaket (nicht dargestellt), wobei Figur 3a das Teilstück 33 schräg von oben, Figur 3b das Teilstück 33 von unten zeigt. Das Teilstück 33 ist aus einer tiefgezogenen Kunststofffolie hergestellt, in der ein erster Hohlraum 331 zur Aufnahme des Gassackpaketes sowie eine Aufnahme 31 zum Aufnehmen eines Gasgenerators (nicht dargestellt) ausgebildet ist. Die Aufnahme 31 ist in einem sich dem Hohlraum 331 anschließenden zweiten Hohlraum 332 angeordnet.

Wie insbesondere aus Figur 3b hervorgeht, ist die Aufnahme 31 im Wesentlichen rohrförmig (schnorchelartig) ausgebildet und ragt in den Hohlraum 332 hinein. Ein zu einem Gassackpaket gefalteter Gassack wird so in den Hohlräumen 331, 332 angeordnet, dass die rohrförmige Aufnahme 31 in eine Öffnung des Gassacks hineinragt, wobei die Öffnung des Gassacks durch die Aufnahme abgedichtet wird.

Das Teilstück 33 weist einen die beiden Hohlräume 331, 332 umgebenden Randabschnitt 333 auf, der von einer Kante 3311, die eine den beiden Hohlräumen 331, 332 gemeinsame Seitenwand 3312 begrenzt, nahezu rechtwinklig absteht. Der Randabschnitt 333 wird (nach Einlegen des Gassackpaketes) mit einem zweiten Teilstück (nicht dargestellt) gasdicht verbunden, wodurch eine geschlossene Hülle entsteht. Das mit dem ersten Teilstück 33 zu verbindende zweite Teilstück ist bevorzugt plattenartig ausgebildet und wird mit dem ersten Teilstück 33 beispielsweise stoffschlüssig (z. B. durch Verschweißen) verbunden.

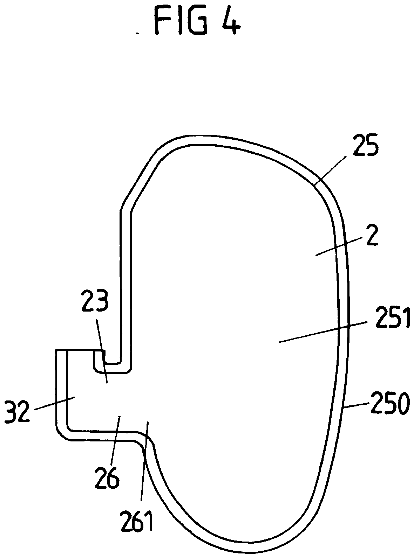

Figur 4 zeigt einen Gassack 2 für eine Gassackanordnung gemäß dem ersten Erfindungsaspekt in ungefaltetem Zustand. Der Gassack 2 weist zwei Gassacklagen auf, die mittels einer Umfangsnaht 25 entlang ihres äußeren Umfangs 250 (also entlang des Gassackzuschnitts) verbunden sind. Zwischen den Gassacklagen ist so eine aufblasbare Kammer 251 gebildet. Es versteht sich, dass auch mehr als zwei Gassacklagen verwendet werden können. Beispielsweise kann jede der beiden Lagen zumindest abschnittsweise mit einer Verstärkungslage versehen sein.

Der Gassack 2 weist eine Öffnung 23 auf, die einen Bereich 27 umfasst, der von dem Gassack 2 absteht. Der Bereich 27 wiederum weist einen ersten Abschnitt in Form eines Ansatzes 26 auf, der mit einem ersten Ende in einen zweiten Abschnitt in Form eines hohlzylindrischen Bereiches 32 und mit einem zweiten Ende in einer Einströmöffnung 261 mündet. Der hohlzylindrische Bereich 32 erstreckt sich nahezu rechtwinklig zu dem Ansatz 26.

Der Gassack 2 kann zu einem Gassackpaket gefaltet und mit einer evakuierbaren (im Wesentlichen gasdichten) Hülle umgeben werden. Der hohlzylindrische Bereich 32 ist so ausgebildet, dass in ihm ein durch die Hülle gebildete Aufnahme und ein in der Aufnahme angeordneter Gasgenerator aufgenommen werden kann. Der Strömungszugang vom Gasgenerator zur Kammer 251 des Gassacks 2 ist in diesem Fall vor dem Auslösen des Gasgenerators durch die Aufnahme verschlossen.

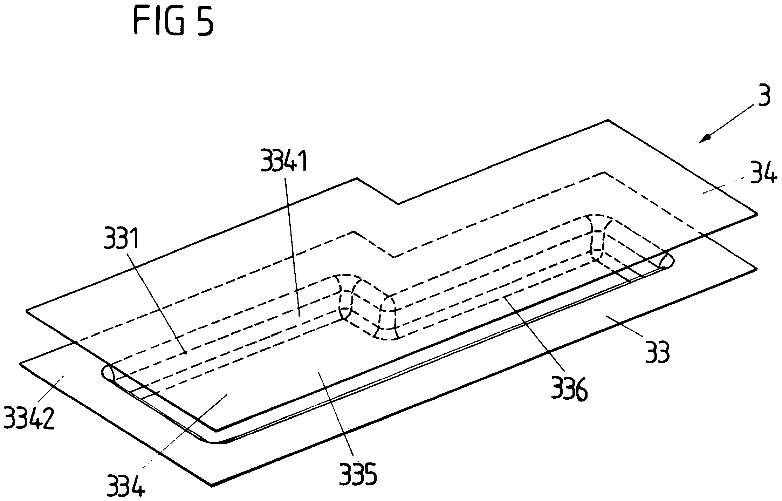

Figur 5 zeigt eine Variante zur Herstellung einer evakuierbaren (gasdichten) Hülle zum Verschließen eines Gassackpaketes. Ein erstes Teilstück 33 weist einen Hohlraumbereich 334 auf, der zum Beispiel durch Tiefziehen aus einer Kunststofffolie hergestellt ist. Der Hohlraumbereich 334 umfasst einen ersten Hohlraum 335, von dem sich ein Hohlraumfortsatz 336 erstreckt.

Der Hohlraumbereich 334 ist durch eine Seitenwand 3341 begrenzt, von dem abgewinkelt ein im Wesentlichen ebener Randbereich 3342 abgeht. Der Randbereich 3342 wird mit einem sich ebenfalls im Wesentlichen eben erstreckenden zweiten Teilstück 34 gasdicht (z.B. durch Stoffschluss) verbunden. Zur Erzeugung einer Aufnahme für einen Gasgenerator wird (bevor oder nachdem die beiden Teilstücke 33, 34 verbunden werden) der Hohlraumfortsatz 336 in den ersten Hohlraum 335 gedrückt (hineingestülpt). Hierdurch entsteht in dem ersten Hohlraum die Aufnahme. Die Länge des Hohlraumfortsatzes 336 entlang der Eindrückrichtung kann größer sein als die Ausdehnung des ersten Hohlraums 335 in dieser Richtung, so dass die durch das Einstülpen entstandene Aufnahme mit einem Abschnitt aus dem ersten Hohlraum herausragt. An dem herausragenden Abschnitt kann z.B. ein in der Aufnahme angeordneter Gasgenerator festgelegt werden (z.B. mit einer Schelle).

Durch das Einstülpen des Fortsatzes 336 in den Hohlraum 335 entsteht angrenzend an die Aufnahme ein Bereich 331, in dem ein zu einem Gassackpaket gefalteter Gassack angeordnet werden kann. Hierbei das Gassackpaket so positioniert werden, dass die durch das Einstülpen entstandene Aufnahme in einer Öffnung des Gassacks angeordnet ist, z.B. in die Öffnung hineinragt.

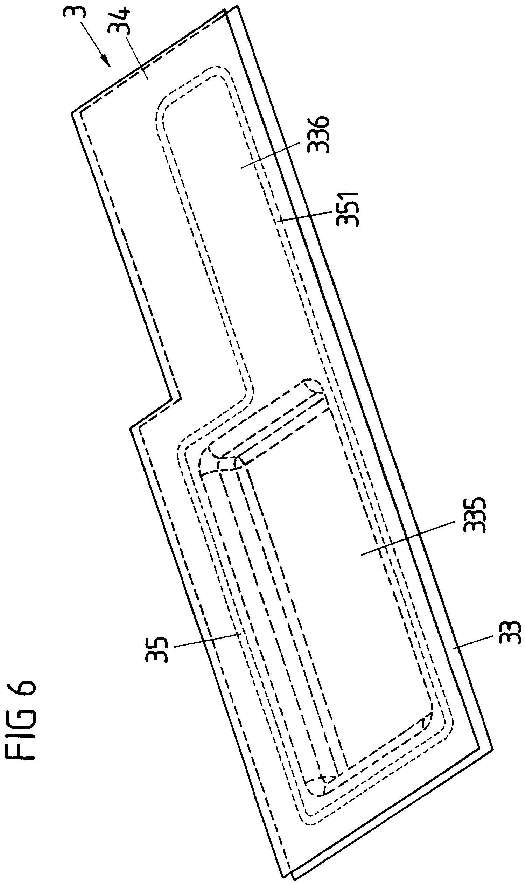

Figur 6 zeigt eine der Hülle der Figur 5 ähnliche Variante einer Hülle 3 für ein Gassackpaket. Ein erstes Teilstück 33 ist mit einem zweiten Teilstück 34 verbunden, wobei in dem ersten Teilstück 33 ein Hohlraum 335 ausgebildet ist. Die Verbindung der Teilstücke 33, 34 erfolgt durch Verschweißen, wobei eine Schweißnaht 35 den Hohlraum 335 einschließt und gleichzeitig mit einem Abschnitt 351 einen Hohlraum zwischen dem ersten Teilstück 33 und dem zweiten Teilstück 34 definiert, der sich dem Hohlraum 335 anschließt. Der durch den Abschnitt 351 der Schweißnaht 35 definierte Hohlraum 336 entspricht dem Hohlraumfortsatz der Figur 5. Wie mit Bezug zur Figur 5 beschrieben, wird z.B. nach oder vor dem Anordnen eines Gassackpaketes im Hohlraum 335 der Hohlraumfortsatz 336 in den Hohlraum 335 hineingestülpt, wodurch eine Aufnahme für einen Gasgenerator (nicht dargestellt) entsteht.

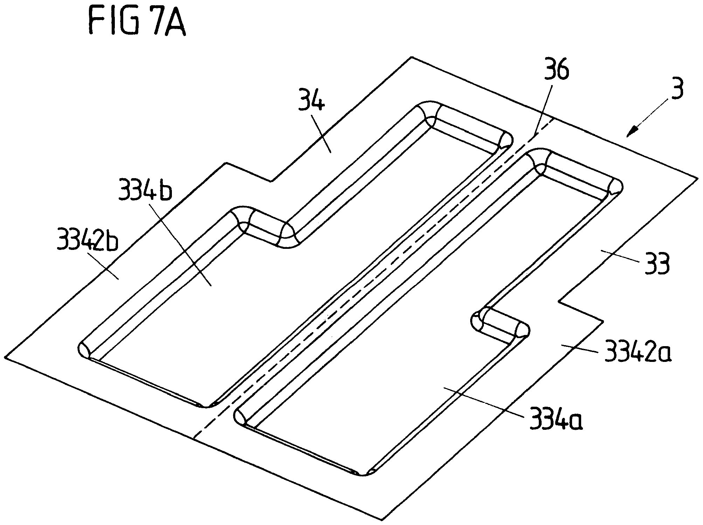

Eine weitere Variante einer Hülle für ein Gassackpaket zeigen die Figuren 7a bis 7c. Eine Hülle 3 weist ein erstes Teilstück 33 sowie ein zweites Teilstück 34 auf, die entlang einer Faltkante 36 einstückig miteinander verbunden sind. Beide Teilstücke 33, 34 weisen jeweils einen Hohlraum 334a, 334b auf, wobei die Hohlräume 334a, 334b jeweils von einem Randbereich 3342a, 3342b umgeben sind. Durch Falten entlang der Faltkante 36 werden die Randbereiche 3342a, 3342b aufeinander geklappt und (z.B. stoffschlüssig) miteinander verbunden.

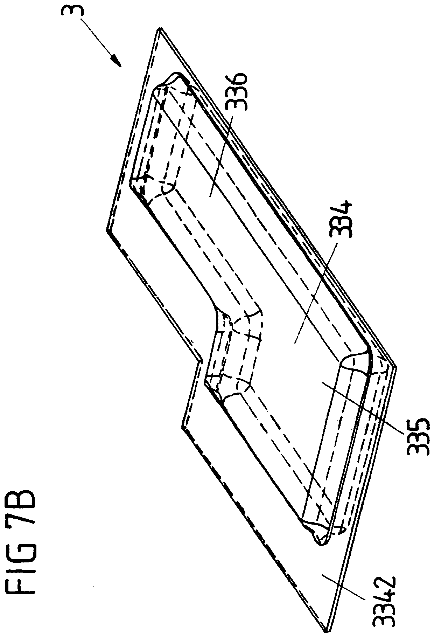

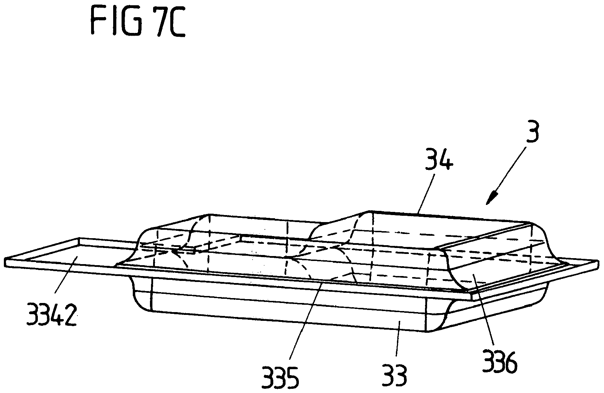

Hierdurch entsteht eine Hülle 3 (siehe Figur 7b), die einen Hohlraum 334 aufweist, der mittig (bezogen auf die Höhe des Hohlraum 334) von einem Randbereich 3342 umgeben ist. Der Hohlraum 334 weist wie die Varianten der Figuren 5 und 6 einen Hohlraumfortsatz 336 auf, der in einen Hohlraumbereich 335 hineingestülpt werden soll, um eine Aufnahme für einen Gasgenerator zu bilden. Figur 7c zeigt eine Seitenansicht der zusammengeklappten Hülle 3 der Figur 7b.

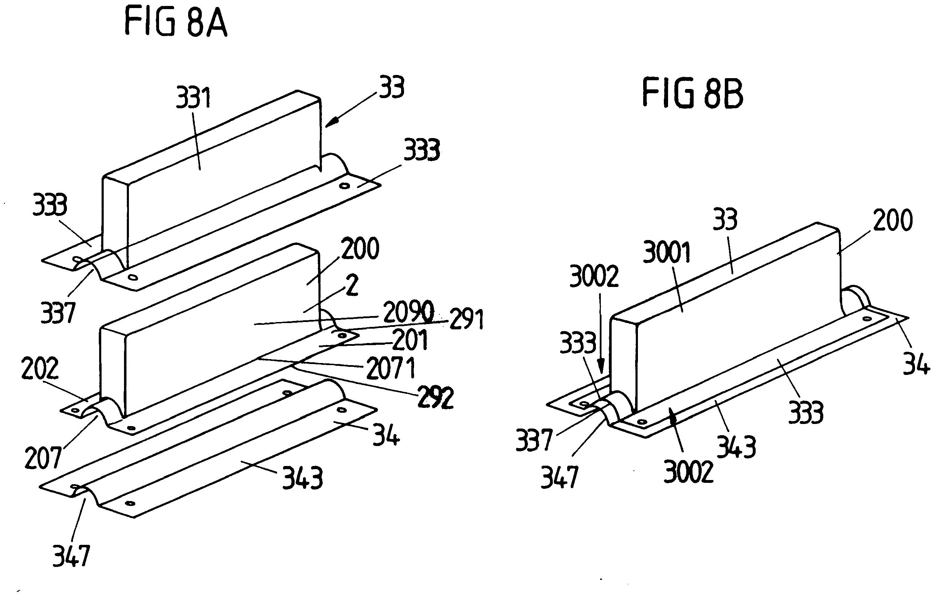

Die Figuren 8 bis 11 beziehen sich auf nicht erfindungsgemäße Beispiele. Figur 8a zeigt (schematisch) einen zu einem Gassackpaket 200 gefalteten Gassack 2, wobei das Gassackpaket 200 von einer Hülle gasdicht umgeben werden soll. Die Hülle besteht aus einem ersten Teilstück 33, das eine als Hohlraum ausgeführte Aufnahme 331 zum Aufnehmen des Gassackpaketes 200 aufweist. Des Weiteren weist die Hülle ein zweites Teilstück 34 auf, das mit dem ersten Teilstück 33 gasdicht verbunden wird, nachdem das Gassackpaket 200 in der Aufnahme 331 angeordnet wurde.

Das erste Teilstück 33 besitzt einen den Hohlraum 331 umgebenden Randbereich 333, der mit einem korrespondierend ausgestalteten Randabschnitt 343 des zweiten Teilstücks 34 verbunden werden kann. Das erste und das zweite Teilstück 33, 34 sowie das Gassackpaket 200 weisen darüber hinaus an einer Seite jeweils eine gewölbte Einbuchtung 337, 347 bzw. 207 auf, die zur Aufnahme eines Rohrgasgenerators (nicht dargestellt) dient.

Das Gassackpaket 200 weist einen Hauptbereich 2090 (quaderförmig dargestellt), der an einer seiner Längsseiten 2071 eine Einströmöffnung (nicht dargestellt) des Gassacks 2 aufweist, durch die Gas aus einem Gasgenerator in den Gassack einströmen kann. Die Einströmöffnung wird begrenzt durch eine erste und eine zweite Gassacklage des Gassacks, wobei Teilabschnitte 201, 202 der Gassacklagen von dem Hauptbereich 2090 des Gassackpaketes 200 abstehen.

Im eingeschweißten Gassackpaket (vgl. Fig. 8b) verläuft der Randabschnitt 333 des ersten Teilstücks 33 entlang einer ersten (in Fig. 8b oberen) Seite 291 jeweils des ersten und des zweiten Teilabschnittes 201, 202 des Gassackpaketes 200. Der Randabschnitt 343 des zweiten Teilstückes 34 verläuft hingegen entlang einer zweiten (unteren) Seite 292 der Randabschnitte 201, 202, die der ersten Seite 291 abgewandt ist. Somit erstreckt sich die Teilabschnitte 201, 202 des Gassackpaketes 200 sandwichartig zwischen dem ersten Teilstück 33 und dem zweiten Teilstück 34.

Zum Festlegen des mit der Hülle 3 umgebenen Gassackpaketes 200 an einem Gasgenerator wird ein durch die Teilabschnitte 201, 202 des Gassackpaketes 200 und den Randabschnitten 333, 334 der Hülle 3 gebildeter Rand 3002 um einen Rohrgasgenerator herumgelegt. Dies wird näher anhand der nachfolgenden Figuren erläutert.

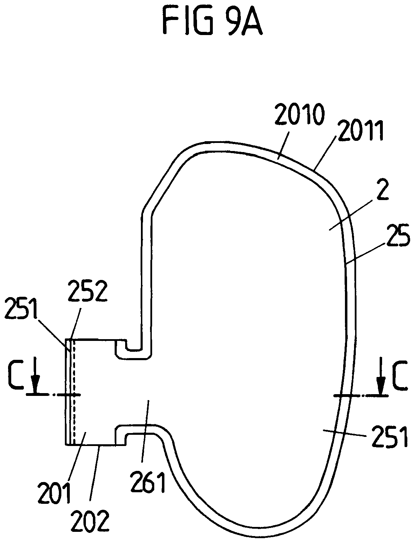

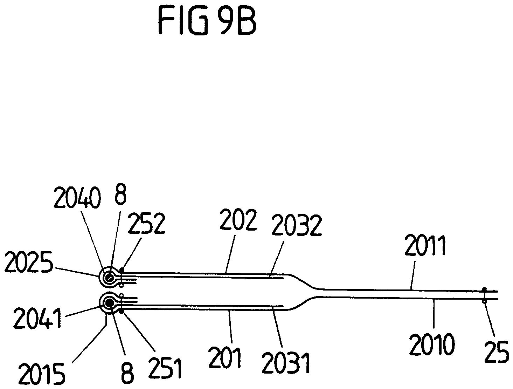

Die Figuren 9a und 9b zeigen schematisch eine Variante eines ungefalteten Gassacks 2 im Querschnitt. Gemäß Figur 9a weist der Gassack 2 eine durch zwei entlang einer Umfangsnaht 25 miteinander verbundene Gassacklagen 2010, 2011 auf, so dass zwischen ihnen eine Gassackkammer 251 definiert ist. Der Gassack 2 weist des Weiteren eine Einströmöffnung 261 auf, durch die Gas eines Gasgenerators (im Auslösefall) in die Gassackkammer 251 einströmen kann. Von der Einströmöffnung 261 stehen Abschnitte 201, 202 der Gassacklagen 2010, 2011 ab, wobei die abstehenden Abschnitte 201, 202 nicht miteinander verbunden sind und somit aufgeklappt werden können. Die Abschnitte 201, 202 werden um einen Gasgenerator insbesondere gegenläufig herumgelegt, um ein aus dem Gassack gefaltetes Gassackpaket mit dem Gasgenerator zu verbinden.

Im Bereich der Abschnitte 201, 202 sind weitere Lagen 2031, 2032 (vgl. Figur 9b) angeordnet, wobei die zusätzlichen Lagen 2031, 2032 als Verstärkungslagen dienen und jeweils eine der Lagen 2031, 2032 mit jeweils einem Abschnitt 201, 202 verbunden ist. Das Verbinden der Verstärkungslagen 2031, 2032 mit den Abschnitten 201, 202 erfolgt durch Nähte 251, 252.

Wie aus der Schnittdarstellung der Figur 9b zudem hervorgeht, bilden sowohl die Verstärkungslagen 2031, 2032 als auch die Abschnitte 201, 202 jeweils eine Schlaufe 2040, 2041 bzw. 2015, 2025. Hierbei sind die durch die Verstärkungslagen 2031, 2032 gebildeten (inneren) Schlaufen 2040, 2041 jeweils von den durch die Abschnitte 201, 202 gebildeten (äußeren) Schlaufen 2015, 2025 umschlossen. In den inneren Schlaufen 2040, 2041 sind jeweils Befestigungsmittel in Form längserstreckter Halteelemente 8 angeordnet, die z. B. in Form eines Drahtes oder ein zylindrischen Stabes ausgestaltet sind.

Die Abschnitte 201, 202 der Gassacklagen 2010, 2011 werden ggf. zusammen mit den Verstärkungslagen 2031, 2032 um den Gasgenerator herum gelegt. Die Halteelemente 8 wirken insbesondere mit am Gasgenerator ausgebildeten Befestigungsstrukturen (nicht dargestellt) zusammen, so dass einem Lösen der um den Gasgenerator herum gelegten Abschnitte 201, 202 entgegengewirkt wird.

Bevorzugt werden die Abschnitte 201, 202 nach Falten des Gassacks zu einem Gassackpaket und Umgeben des Gassackpaketes mit einer gasdichten Hülle von einem Abschnitt der Hülle vor dem Herumlegen um den Rohrgasgenerator beidseitig umgeben (vgl. Fig. 8a und 8b). Dabei liegt der Abschnitt der Hülle so an beiden Seiten der Abschnitte 201, 202 an, dass er zusammen mit den Abschnitten 201, 202 um den Gassack herum gewickelt wird.

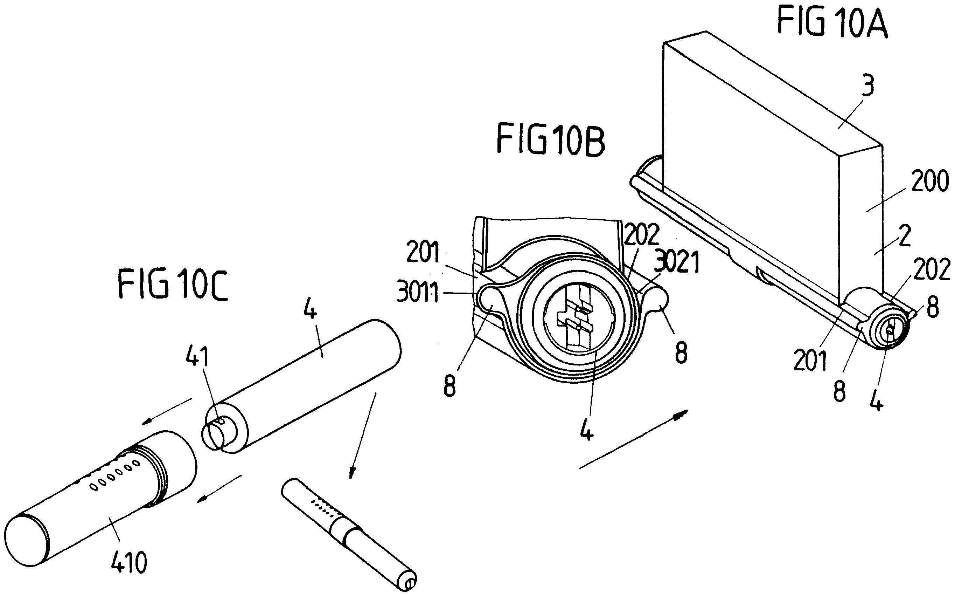

Die Figuren 10a bis 10c betreffen eine weitere nicht erfindungsgemäße Variante einer Gassackanordnung. Ein von einer Hülle 3 umgebenes Gassackpaket 200 (gefalteter Gassack 2) ist an einem Rohrgasgenerator 4 angeordnet. Das Gassackpaket 200 weist zwei Teilabschnitte 201, 202 auf, die jeweils entlang eines äußeren Umfanges um den Rohrgasgenerator 4 herum gelegt sind (jeweils um etwa ¾ des äußeren Umfanges des Rohrgasgenerators 4). Die Teilabschnitte 201, 202 stellen Abschnitte jeweils mindestens einer Gassacklage dar, die jeweils beidseitig anliegend von Abschnitten 3011 bzw. 3021 der Hülle 3 umschlossen sind, so dass zwischen dem Gasgenerator 4 und den Abschnitten 201, 202 ein Teilabschnitt (gebildet durch einen Teilbereich der Abschnitte 3011, 3021) der Hülle 3 verläuft. Das beidseitige Umschließen der Abschnitte 201, 202 erfolgt derart, dass jeweils an jeder Seite der Abschnitte 201, 202 ein Teilabschnitt 3011 bzw. 3021 anliegt. D.h. die Teilabschnitte 3011, 3021 der Hülle 3 erstrecken sich um die Abschnitte 201, 202 der Gassacklagen herum und liegen daher sowohl an der dem Gasgenerator 4 zugewandten Seite als auch an ihrer dem Gasgenerator 4 abgewandten Seite der Abschnitte 201, 202 an.

Die Teilabschnitte 201, 202 werden somit sandwichartig von den Teilabschnitten 3011, 3021 der Hülle 3 umschlossen. Eine Möglichkeit zur Realisierung einer derartigen Einhüllung der Abschnitte 201, 202 ist in den Figuren 8a und 8b gezeigt. Die "eingepackten" Teilabschnitte 201, 202 sind - wie in der vergrößerten Darstellung der Figur 10b gezeigt - um den Gasgenerator 4 herumgelegt.

In einem Randbereich (an den freien Enden) der Teilabschnitte 201, 202 sind jeweils stabförmige Halteelemente 8 angeordnet, die mit Befestigungsstrukturen (nicht dargestellt) des Gasgenerators zusammenwirken können.

Figur 10c zeigt den Rohrgasgenerator 4 der Figuren 10a, 10b. Der Rohrgasgenerator 4 umfasst im Bereich einer Gasausströmöffnung 41 einen Gasdiffusor 410 zum Verteilen des aus dem Gasgenerator 4 ausströmenden Gases. Der Gasgenerator 4 ist gemäß den Figuren 10a, 10b gemeinsam mit seinem Diffusor 410 von den Teilabschnitten 201, 202 des Gassacks 2 umwickelt.

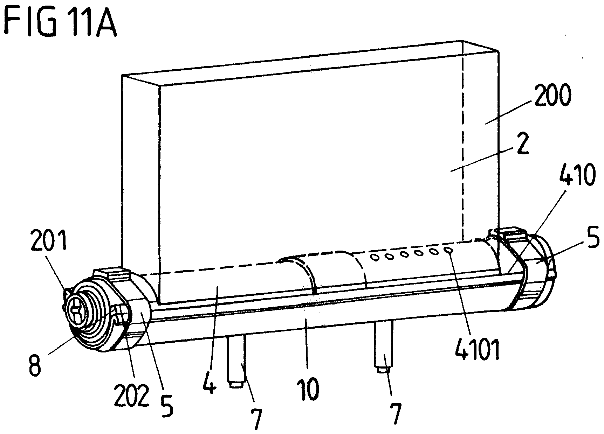

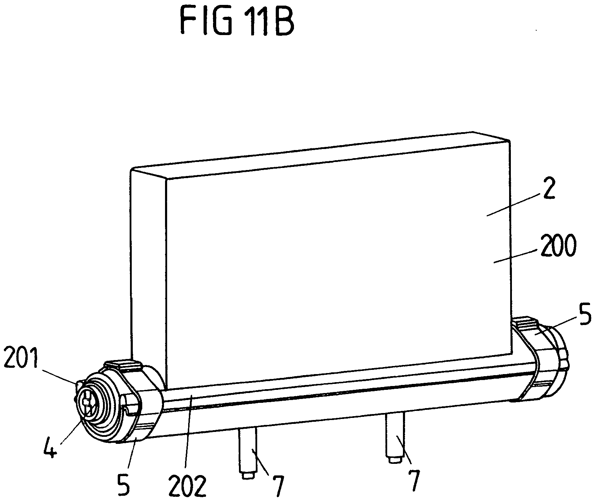

Figuren 11a und 11b zeigen eine weitere nicht erfindungsgemäße Variante eines Gassackmoduls. Hier ist analog zu der Ausführungsform der Figuren 10a bis 10c ein Gassackpakt 200 (gefalteter Gassack 2) dadurch mit einem Rohrgasgenerator (der einen Diffusor 410 umfasst) verbunden, dass laschenartige Teilabschnitte 201, 202 des Gassacks 2 um einen äußeren Umfang des Rohrgasgenerators 4 bzw. des Diffusors 410 herumgelegt sind. Die Teilabschnitte 201, 202 weisen jeweils stabförmige Haltelemente 8 auf, die entlang ihrer (freien) Längskante angeordnet sind und sich nach dem Herumlegen der Abschnitte 201, 202 um den Rohrgasgenerator 4 entlang der Längsachse des Rohrgasgenerators erstrecken.

Die Halteelemente 8 werden von schienartigen Haltestrukturen 102, die an einem Träger 10 angeordnet sind, übergriffen, wodurch einem Lösen der um den Gasgenerator herum gelegten Abschnitte 201, 202 entgegengewirkt wird. Die Teilabschnitte 201, 202 und der Träger zudem mittels zweier Schellen 5 als Befestigungsmittel an dem Rohrgasgenerator 4 festgelegt. Der Träger 10 weist darüber hinaus Stehbolzen 7 auf, mittels derer die Gassackanordnung (Gasgenerator und Gassackpaket) an einem Fahrzeugbauteil befestigt werden kann.

Der Diffusor 410 besitzt Ausströmöffnungen 4101, durch die Gas des Gasgenerators austritt. Die Ausströmöffnungen 4101 sind so in Bezug auf eine Einströmöffnung (oder auch mehrere Einströmöffnungen) des Gassacks 2 angeordnet, dass Gas des Gasgenerators in den Gassack (in eine aufblasbare Kammer des Gassacks) eintreten kann.

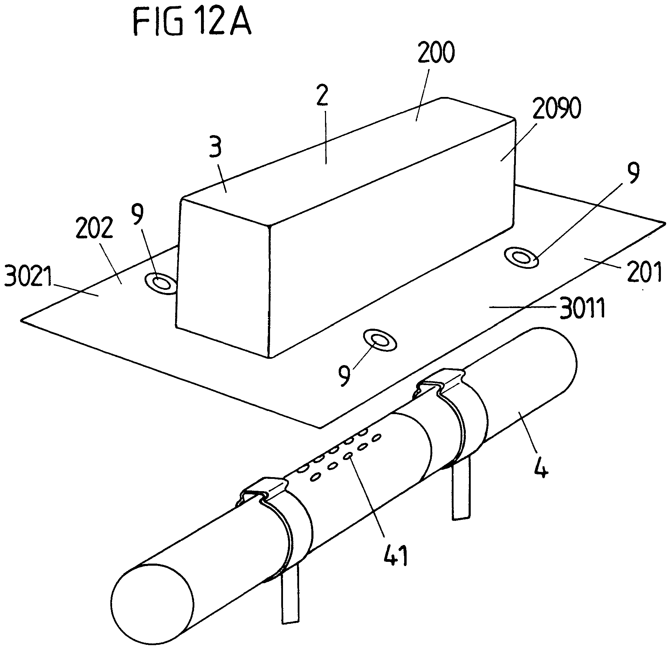

Die Figuren 12a bis 12c beziehen sich auf eine weitere nicht erfindungsgemäße Variante des zweiten Erfindungsaspektes. Ein Gassack 2 ist zu einem Gassackpaket 200 gefaltet, das von einer Hülle 3 gasdicht verschlossen ist. Das Gassackpaket 200 weist laschenartige Abschnitte 201, 202 auf (die nicht gefaltet sind), die sich abstehend von einem Hauptbereich 2090 des Gassackpaketes 200 erstrecken. Die Teilabschnitte 201, 202 stellen Abschnitte jeweils einer Gassacklage des Gassacks 2 dar und sind jeweils von Teilabschnitten 3011, 3021 der Hülle 3 umschlossen. Das Umschließen der Teilabschnitte 201, 202 erfolgt dabei - wie oben bereits erläutert - derart, dass die Hüllen-Teilabschnitte 3011, 3021 die Teilabschnitte 201, 202 des Gassackpaketes 200 jeweils beidseitig anliegend umgeben.

In den Teilabschnitten 201, 202 (und entsprechend auch in den Abschnitten 3011, 3021 der Hülle 3) sind Befestigungsöffnungen 9 angeordnet. Das Gassackpaket 200 wird so in Bezug zu einem Gasgenerator 4 angeordnet, dass Gas, das aus Ausströmöffnungen 41 des Gasgenerators 4 ausströmt, durch mindestens eine Einströmöffnung (nicht dargestellt) in den Gassack 2 einströmen kann.

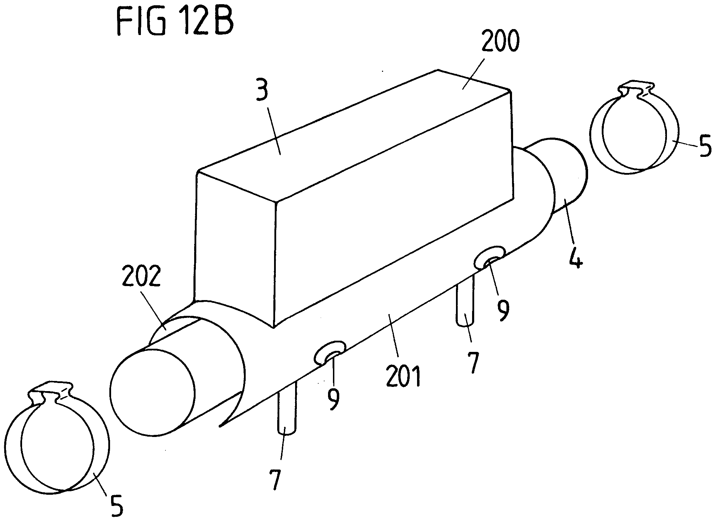

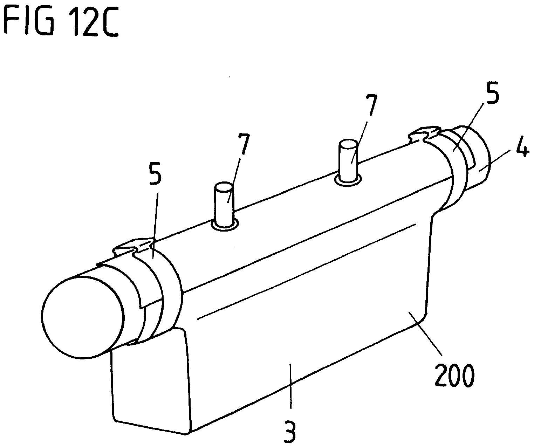

Figur 12b zeigt, wie die umwickelten Teilabschnitte 201, 202 um den Rohrgasgenerator 4 herumgelegt werden, um das Gassackpaket 200 mit dem Gasgenerator 4 zu verbinden. An dem Gasgenerator 4 sind Stehbolzen 7 angebracht, wobei die Teilabschnitte 201, 202 so um den Gasgenerator 4 herumgewickelt werden, dass die Stehbolzen 7 die Befestigungsöffnungen 9 der Teilabschnitte 201, 202 durchgreifen. Der Figur 12c ist zu entnehmen, dass die Teilabschnitte 201, 202 nach Herumlegen um den Rohrgasgenerator 4 mittels zweier Schellen 5 an dem Rohrgasgenerator 4 festgelegt werden.

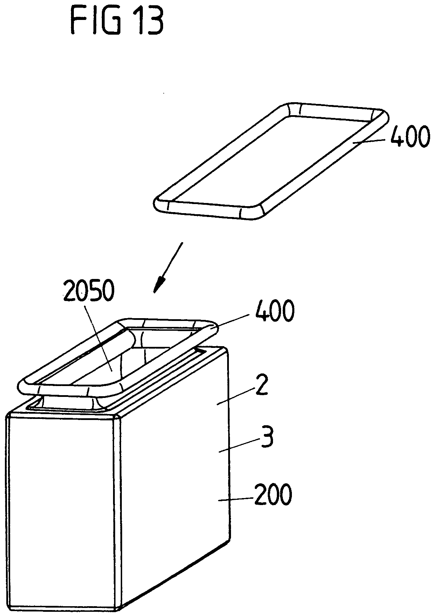

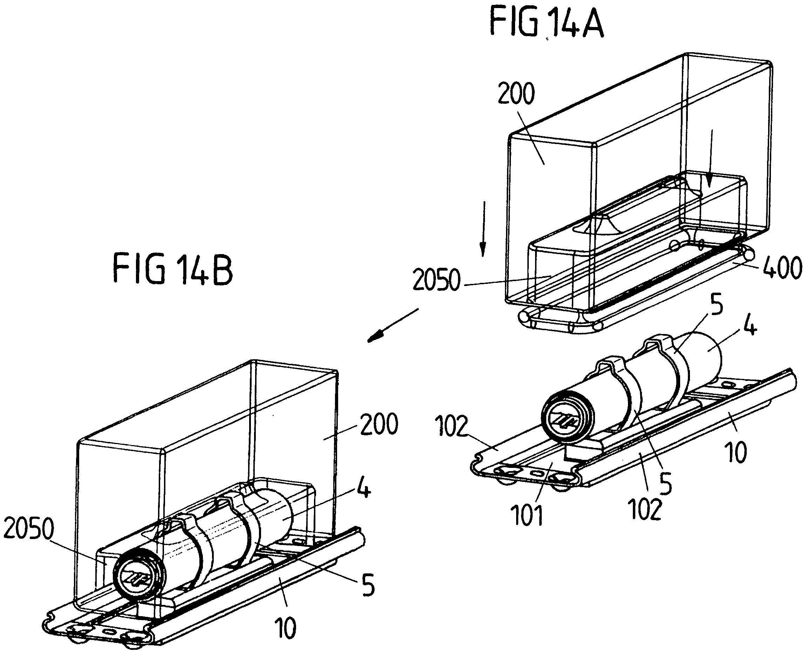

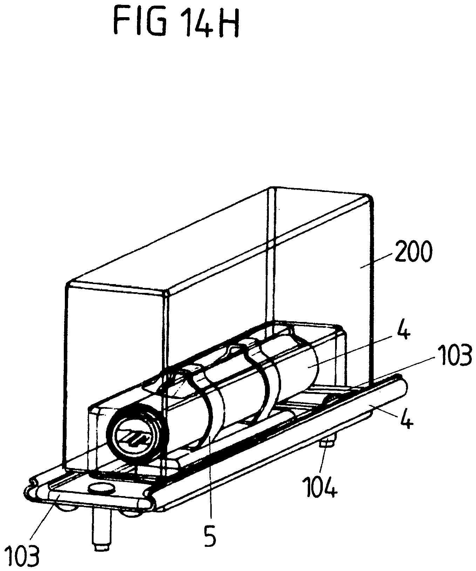

Die Figuren 13 bis 15 betreffen weitere, nicht erfindungsgemäße Beispiele einer Gassackanordnung. Ein erstes Beispiel ist in den Figuren 13 bis 15 gezeigt. Figur 13 stellt ein Gassackpaket 200 (das durch Falten eines Gassacks 2 entsteht) dar, das mit einer gasdichten Hülle 3 umgeben ist. Das Gassackpaket 200 weist eine Befestigungsstruktur in Form eines Rahmens 400 auf. Der Rahmen 400, der zum Beispiel aus Metall oder Kunststoff gebildet ist, ist an einem Randbereich des Gassacks 2 angeordnet, wobei der Rahmen 400 zum Beispiel in einer Schlaufe dieses Randbereiches angeordnet sein kann. Das Gassackpaket 200 ist so ausgestaltet, dass es eine zentrale Aufnahme 2050 aufweist, die zum Aufnehmen eines Gasgenerators, insbesondere eines Rohrgasgenerators, dient. Dies ist in den Figuren 14a bis 14e gezeigt.

Der Rohrgasgenerator 4 ist mittels Schellen 5 an einem Träger 10 festgelegt. Das Gassackpaket 200 wird so auf die Anordnung aus Gasgenerator 4 und Träger 10 aufgesetzt, dass sich der Gasgenerator 4 in die Aufnahme 2050 des Gassackpaketes hineinerstreckt; vgl. Figur 14b.

Der Träger 10 weist eine Einbuchtung 101 auf, die den Rahmen 400 des Gassackpaketes 200 aufnimmt. Des Weiteren umfasst der Träger 10 zwei einander gegenüberliegende, entlang seiner Längsrichtung (und somit in Längsrichtung des Rohrgasgenerators 4) verlaufende schienenartige Führungselemente 102.

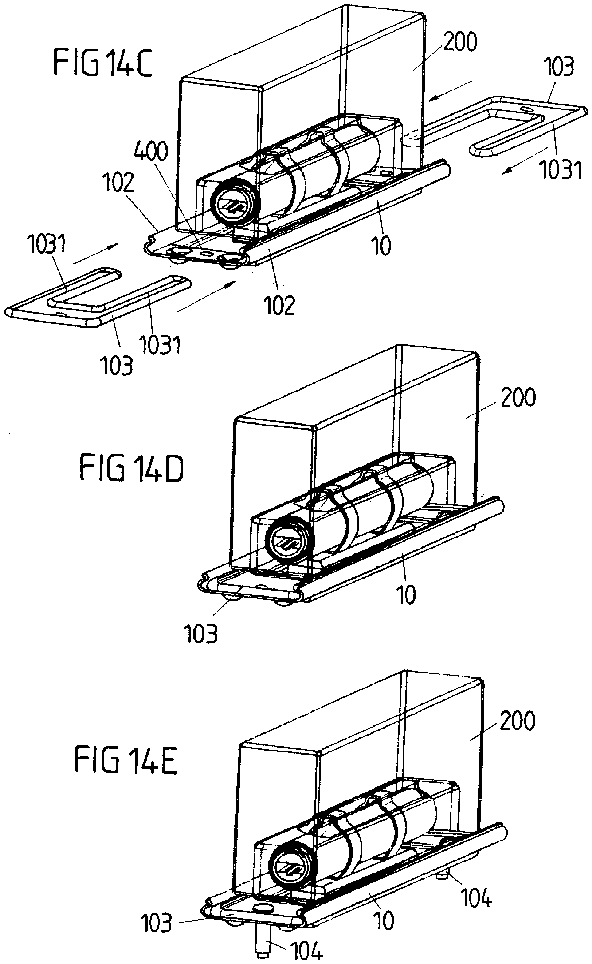

Wie in den Figuren 14c bis 14e gezeigt, dienen die beiden Führungsstrukturen 102 dazu, an einander gegenüberliegenden Stirnseiten des Trägers 10 jeweils ein riegelartiges Befestigungselement 103 aufzunehmen. Die Befestigungselemente 103 weisen jeweils zwei einander gegenüberliegende Arme 1031 auf, die in die Führungsschienen 102 eingeschoben werden können, so dass das Riegelelement 103 innerhalb der Führungsschienen 102 und entlang der Längsrichtung des Trägers 10 verschoben werden kann.

Die U-förmig ausgebildeten Riegelelemente 103 werden so in dem Träger 10 verschoben, dass ihre Arme 1031 den Rahmen 400 des Gassackpaketes 200 hintergreifen und dadurch das Gassackpaket 200 am Träger 10 fixieren. Den Montagezustand mit komplett in den Träger 10 eingeschobenen Riegelelementen 103 zeigt die Figur 14d. Gemäß Figur 14e werden die Riegelelemente 103 selber dadurch am Träger 10 festgelegt, dass bolzenartige Befestigungselemente 104 Befestigungsöffnungen in den Riegelelementen 103 und in dem Träger 10 durchgreifen.

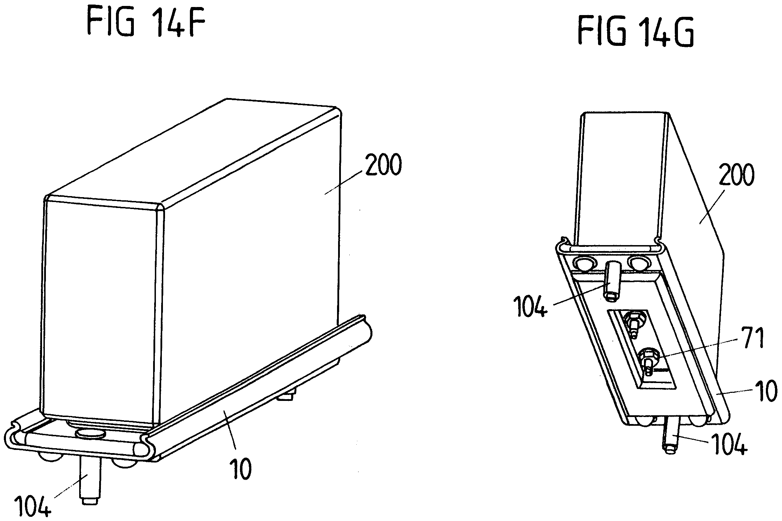

Weitere Ansichten der fertig montierten Gassackanordnung zeigen die Figuren 14f bis 14h. Figur 14g stellt eine Ansicht der Unterseite der montierten Gassackanordnung dar. Es geht hervor, dass die Schellen 5, die den Gasgenerator 4 mit dem Träger 10 verbinden, an der dem Gasgenerator 4 abgewandten Seite Stehbolzen 7 aufweisen, die mittels Muttern 71 an dem Träger 10 fixiert sind.

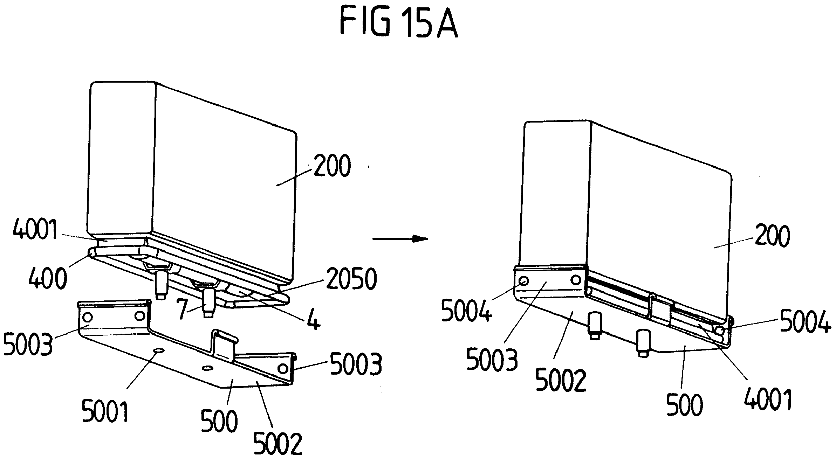

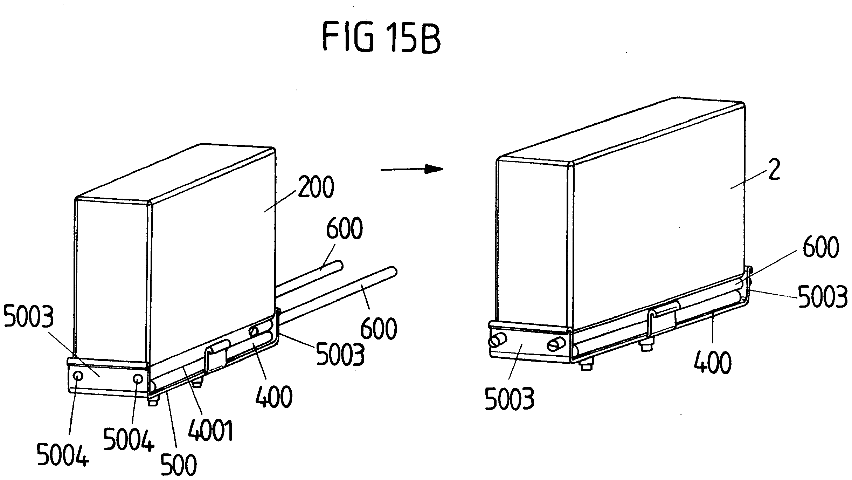

Eine weitere nicht erfindungsgemäße Variante einer Gassackanordnung zeigen die Figuren 15a und 15b. Ähnlich der Figuren 14a bis 14h ist in einer Aufnahme 2050 eines Gassackpaketes 200 ein Gasgenerator 4 angeordnet. Der Gasgenerator 4 weist Gewindebolzen 7 auf, die Befestigungsöffnungen 5001 in einem Halteblech (Träger) 500 durchgreifen. Das Halteblech 500 weist eine Bodenplatte 5002 auf, von der sich zwei nahezu parallel gegenüberliegende Stirnseiten 5003 erstrecken.

Das Gassackpaket 200 weist ähnlich der Figur 13 an einer Seite einen Rahmen 400 auf, der bei Montage des Gassackpaketes 200 an dem Träger 500 auf dessen Bodenplatte 5002 aufsetzt. Die Stirnseiten 5003 des Trägers 500 haben Öffnungen 5004, die jeweils mit sich oberhalb des Metallrahmens 400 erstreckenden Nuten 4001 des Gassackpaketes 200 fluchten.

Wie in Figur 15b gezeigt, werden in Öffnungen 5004 einer ersten Stirnseite des Trägers 500 zwei stabförmige Befestigungselemente 600 derart eingeschoben, dass sie Längsabschnitte des Rahmens 400 des Gassackpaketes 200 hintergreifen und somit das Gassackpaket 200 an dem Träger 500 festlegen. Die Befestigungselemente 600 werden durch die angrenzend an den Rahmen 400 im Gassackpaket verlaufenden Nuten 4001 geführt und in diesen jeweils soweit vorgeschoben, bis sie die Öffnung 5004 einer zweiten Stirnseite, die der ersten Stirnseite gegenüberliegt, durchgreifen.

### Bezugszeichenliste

- 1: Gassackanordnung
- 2: Gassack
- 22: Abschnitt
- 23: Öffnung
- 231: Ende
- 2010, 2011: Gassacklagen
- 2031, 2032: Verstärkungslagen
- 200: Gassackpaket
- 201, 202: Teilabschnitt
- 2015, 2025: äußere Schlaufe
- 2040, 2041: innere Schlaufe
- 2050: zentrale Aufnahme
- 2071: Längsseite
- 2090: Hauptbereich
- 25: Umfangsnaht
- 250: äußerer Umfang
- 251: aufblasbare Kammer
- 26: Ansatz
- 261: Einströmöffnung
- 291, 292: Seite Randabschnitt
- 27: Bereich
- 3: Hülle
- 31: Aufnahme
- 32: hohlzylindrischer Bereich
- 33: erstes Teilstück
- 331: erster Hohlraum
- 3311: Kante
- 3312: Seitenwand
- 332: zweiter Hohlraum
- 333: Randabschnitt
- 334, 334a, 334b: Hohlraumbereich
- 3341: Seitenwand
- 3342: Randbereich
- 335: erster Hohlraum
- 336: Hohlraumfortsatz
- 34: zweites Teilstück
- 343: Randabschnitt
- 35: Schweißnaht
- 351: Abschnitt
- 36: Faltkante
- 337, 347, 207: Einbuchtung
- 3011, 3021: Teilabschnitt der Hülle
- 4: Rohrgasgenerator
- 41: Gasausströmöffnung
- 410: Gasdiffusor
- 4101: Ausströmöffnungen
- 5: Schelle
- 6: Halter
- 7: Stehbolzen
- 71: Mutter
- 8: Haltelement
- 400: Rahmen
- 4001: Nut
- 10: Träger
- 101: Einbuchtung
- 102: Führungsstruktur
- 103: Befestigungselement
- 1031: Arm
- 104: bolzenartiges Befestigungselement
- 500: Halteblech
- 5001: Befestigungsöffnung
- 5002: Bodenplatte
- 5003: Stirnseite
- 5004: Öffnung
- 600: Befestigungselement

## Patentansprüche

1. Gassackanordnung für ein Fahrzeuginsassen-Rückhaltesystem mit
- einem Gassack (2), der zu einem Gassackpaket (200) gefaltet ist;
- einer evakuierbaren Hülle (3), die das Gassackpaket (200) umschließt;
- einem Gasgenerator (4) zum Aufblasen des Gassacks (2);
- einer Aufnahme (31), die durch einen Abschnitt der das Gassackpaket umschließenden Hülle (3) gebildet ist und in der zumindest ein Abschnitt des Gasgenerators (4) aufgenommen ist, wobei
- der Gassack (2) eine Öffnung (23) aufweist, die einen Zugang zu einem aufblasbaren Bereich des Gassacks bildet und in der die Aufnahme (31) zumindest abschnittsweise angeordnet ist oder hineinragt,
**dadurch gekennzeichnet, dass**
der Gasgenerator (4) als Rohrgasgenerator ausgebildet ist; und
die Öffnung (23) als Loch in einer eine Kammer des Gassacks bildenden Gassacklage ausgebildet ist, in das die Aufnahme hineinragt, oder
die Aufnahme (31) hohlzylindrisch ausgebildet ist und die Öffnung (23) einen hohlzylindrischen Bereich (32) aufweist, in dem die Aufnahme (31) angeordnet ist.

2. Gassackanordnung nach Anspruch 1, **dadurch gekennzeichnet, dass** die durch die Hülle (3) gebildete Aufnahme (31) derart in der Öffnung (23) des Gassacks (2) angeordnet ist, dass die Öffnung (23) durch die Aufnahme (31) verschlossen ist.

3. Gassackanordnung nach einem der vorhergehenden Ansprüche, **dadurch gekennzeichnet, dass** die Öffnung (23) des Gassacks (2) einen vom Gassack (2) abstehenden Bereich (27) aufweist, in den sich die durch die Hülle (3) ausgebildete Aufnahme (31) hinein erstreckt.

4. Gassackanordnung nach Anspruch 3, **dadurch gekennzeichnet, dass** der der vom Gassack (2) abstehende Bereich (27) einen ersten Abschnitt (26) und einen sich abgewinkelt zum ersten Abschnitt erstreckenden zweiten Abschnitt (32) aufweist.

5. Gassackanordnung nach einem der vorhergehenden Ansprüche, **dadurch gekennzeichnet, dass** die Hülle (3) ein erstes Teilstück (33) und ein zweites Teilstück (34) aufweist, wobei das erste Teilstück (33) mit dem zweiten Teilstück (34) im Wesentlichen gasdicht verbunden ist.

6. Gassackanordnung nach Anspruch 5, **dadurch gekennzeichnet, dass** in dem ersten Teilstück (33) eine Gassackpaketaufnahme (331), in der das Gassackpaket (200) aufgenommen ist, sowie die Aufnahme (31) für den Gasgenerator (4) ausgebildet ist.

7. Gassackanordnung nach einem der vorhergehenden Ansprüche, **dadurch gekennzeichnet, dass** die Hülle (3) einen Hohlraum (335) zum Aufnehmen des Gassackpaketes (200) aufweist.

8. Gassackanordnung nach Anspruch 7, **dadurch gekennzeichnet, dass** in dem Hohlraum (335) durch Einstülpen eines vom Hohlraum (335) abgehenden Hohlraumfortsatzes (336) in den Hohlraum (335) die Aufnahme (31) für den Gasgenerator (4) gebildet ist.

9. Gassackanordnung nach einem der vorhergehenden Ansprüche, **dadurch gekennzeichnet, dass** die Hülle (3) aus einem Kunststoffmaterial gebildet ist.

10. Gassackanordnung nach einem der vorhergehenden Ansprüche, **dadurch gekennzeichnet, dass** die Hülle (3) flexibel ausgebildet ist.

11. Gassackanordnung nach einem der vorhergehenden Ansprüche, **dadurch gekennzeichnet, dass** in der Hülle (3) zum Komprimieren des Gassackpaketes (200) ein Unterdruck vorliegt.

12. Fahrzeuginsassen-Rückhaltesystem mit einer Gassackanordnung gemäß einem der vorhergehenden Ansprüche.

## Claims

1. Airbag arrangement for a vehicle occupant restraint system with
- an airbag (2) folded into an airbag package (200);
- a cover (3) that may be evacuated and encloses the airbag package (200);
- a gas generator (4) for inflating the airbag (2);
- a receptacle (31) formed by a section of the cover (3) enclosing the airbag package and in which at least one section of the gas generator (4) is housed, whereby
- the airbag (2) comprises an opening (23), which forms an inlet to an inflatable area of the airbag and in which the receptacle (31) is arranged at least sectionally or into which the receptacle projects,
**characterized in that**
the gas generator (4) is formed as a tubular gas generator, and
the opening (23) is formed as a hole in an airbag layer which forms a chamber of the airbag into which the receptacle (31) projects or
the receptacle (31) is formed hollow cylindrical and the opening (23) has a hollow cylindrical area (32) in which the receptacle (31) is arranged.

2. Airbag arrangement according to claim 1, **characterized in that**, the receptacle (31) formed by the cover (3) is arranged in the opening (23) of the airbag (2) in such a manner that the opening (23) is closed by the receptacle (31).

3. Airbag arrangement according to one of the preceding claims, **characterized in that**, the opening (23) of the airbag (2) has an area (27) sticking out from the airbag (2) in which the receptacle (31) formed by the cover (3) is extended into.

4. Airbag arrangement according to claim 3, **characterized in that**, the area (27) sticking out from the airbag (2) has a first section (26) and a second section (32) which extends angular to the first section.

5. Airbag arrangement according to one of the preceding claims, **characterized in that**, the cover (3) has first part (33) and a second part (34), whereby the first part (33) is connected with the second part (34) substantially gas-tight.

6. Airbag arrangement according to claim 5, **characterised in that**, in the first part (33) an airbag package receptacle (331), in which the airbag package is housed, and the receptacle (31) for the gas generator (4) is formed.

7. Airbag arrangement according to one of the preceding claims, **characterized in that**, the cover (3) has a cavity (335) for housing the airbag package (200).

8. Airbag arrangement according to claim 7, **characterized in that**, in the cavity (335) the receptacle (31) for the gas generator (4) is formed by turning inward into the cavity (335) a cavity extension (336) branching off from the cavity (335).

9. Airbag arrangement according to one of the preceding claims, **characterized in that**, the cover (3) is made of a plastic material.

10. Airbag arrangement according to one of the preceding claims, **characterized in that**, the cover (3) is flexibly formed.

11. Airbag arrangement according to one of the preceding claims, **characterized in that**, a low pressure is existent in the cover (3) for compressing the airbag package (200).

12. Vehicle occupant restraint system with an airbag arrangement according to one of the preceding claims.

## Revendications

1. Agencement à coussin gonflable pour un système de retenue de passager dans un véhicule automobile, comprenant
- un coussin gonflable (2) qui est replié pour former un paquet de coussin gonflable (200) ;
- une enveloppe (3) susceptible d'être évacuée, qui enferme le paquet de coussin gonflable (200) ;
- un générateur de gaz (4) pour gonfler le coussin gonflable (2) ;
- un logement (31), qui est formé par un tronçon de l'enveloppe (3) qui enferme le paquet de coussin gonflable et dans lequel est reçu au moins un tronçon du générateur de gaz (4), dans lequel
- le coussin gonflable (2) comporte une ouverture (23), qui forme un accès vers une zone gonflable du coussin gonflable et dans laquelle le logement (31) pénètre ou est agencé au moins par tronçon,
**caractérisé en ce que**
le générateur de gaz (4) est réalisé sous forme de générateur de gaz tubulaire ; et
l'ouverture (23) est réalisée sous forme de trou dans une couche du coussin gonflable qui forme une chambre du coussin gonflable, trou dans lequel pénètre le logement, ou bien
le logement (31) est réalisé sous forme cylindrique creuse et l'ouverture (23) présente une zone cylindrique creuse (32) dans laquelle est agencé le logement (31).

2. Agencement à coussin gonflable selon la revendication 1, **caractérisé en ce que** le logement (31) formé par l'enveloppe (3) est agencé dans l'ouverture (23) du coussin gonflable (2) de telle manière que l'ouverture (23) est obturée par le logement (31).

3. Agencement à coussin gonflable selon l'une des revendications précédentes, **caractérisé en ce que** l'ouverture (23) du coussin gonflable (2) comprend une zone (27) qui dépasse du coussin gonflable (2) et dans laquelle s'étend le logement (31) réalisé par l'enveloppe (3).

4. Agencement à coussin gonflable selon la revendication 3, **caractérisé en ce que** la zone (27) qui dépasse du coussin gonflable (2) comprend un premier tronçon (26) et un deuxième tronçon (32) qui s'étend en formant un angle par rapport au premier tronçon.

5. Agencement à coussin gonflable selon l'une des revendications précédentes, **caractérisé en ce que** l'enveloppe (3) comprend une première portion partielle (3) et une deuxième portion partielle (34), la première portion partielle (33) étant reliée à la deuxième portion partielle (34) de manière sensiblement étanche aux gaz.

6. Agencement à coussin gonflable selon la revendication 5, **caractérisé en ce qu'**un logement de paquet de coussin gonflable (331), dans lequel le paquet de coussin gonflable (200) est reçu, est réalisé dans la première portion partielle (33), de même que le logement (31) pour le générateur de gaz (4).

7. Agencement à coussin gonflable selon l'une des revendications précédentes, **caractérisé en ce que** l'enveloppe (3) comporte une cavité (335) pour recevoir le paquet de coussin gonflable (200).

8. Agencement à coussin gonflable selon la revendication 7, **caractérisé en ce que** le logement (31) pour le générateur de gaz (4) est formé dans la cavité (335) par retroussement dans la cavité (335) d'un prolongement de cavité (336) qui part de la cavité (335).

9. Agencement à coussin gonflable selon l'une des revendications précédentes, **caractérisé en ce que** l'enveloppe (3) est réalisée en une matière synthétique.

10. Agencement à coussin gonflable selon l'une des revendications précédentes, **caractérisé en ce que** l'enveloppe (3) est réalisée flexible.

11. Agencement à coussin gonflable selon l'une des revendications précédentes, **caractérisé en ce qu'**une dépression règne dans l'enveloppe (3) pour comprimer le paquet de coussin gonflable (200).

12. Système de retenue de passager dans un véhicule automobile, comprenant un agencement à coussin gonflable selon l'une des revendications précédentes.
